# EUROPÄISCHE PATENTSCHRIFT

(11) **EP 1 465 416 B1**
(45) Veröffentlichungstag und Bekanntmachung des Hinweises auf die Patenterteilung: **16.06.2010**
(21) Anmeldenummer: 03007087.4
(22) Anmeldetag: 28.03.2003
(51) Int. Cl.: H04N 5/445

(54) **Bediensystem für ein Fernsehempfangsgerät**
Operating system for television receiver
Système de commande pour récepteur de télévision

(43) Veröffentlichungstag der Anmeldung: 06.10.2004
(73) Patentinhaber: LOEWE OPTA GmbH, 96317 Kronach (DE)
(72) Erfinder: Bayer, Anton, 96264 - Altenkunstadt (DE); Schlee, Dieter, 96267 - Altenkunstadt (DE)

(56) Entgegenhaltungen:
- EP-A- 0 935 393
- EP-A- 1 158 795

## Beschreibung

Die Erfindung betrifft ein Bediensystem für ein Fernsehempfangsgerät mit den im Oberbegriff des Anspruchs 1 angegebenen Merkmalen, ein Femsehempfangsgerät mit einem derartigen Bediensystem, ein zum Bediensystem korrespondierendes Verfahren sowie eine Anwendung des Verfahrens auf ein Femsehempfangsgerät.

Ein gattungsgemäßes Bediensystem ist aus der EP 0 935 393 A bekannt. Bei diesem bekannten Bediensystem werden in einer Kabelkopfstation oder in einem Bedienungscenter bestimmte Bedienmenüs zu einer Sendung kreiert und diese an eine Set Top Box zur Speicherung übertragen. Es handelt sich dabei um Menüs, die Videoinhalte, graphische und Textinhalte beinhalten sowie die Darstellungsformen, um diese in übertragener gewünschter Weise darzustellen. Der Gerätehersteller hat auf die Darstellungsform und die Anordnung der einzelnen Menüelemente auf dem Bildschirm keinen Einfluss. Diese werden von der Kopfstation ausgegeben. Die selektierten Menüdarstellungen zeigt die OSD-Schaltung in entsprechender Weise an.

Die Verwendung von auf dem Bildschirm eines Fernsehgerätes oder auf dem Display eines Flachbildschirmgerätes dargestellten Bedienmenüs zur Auswahl von Bedienfunktionen und zum Eingeben von Steuergrößen bezüglich der ausgewählten Bedienfunktion ist bei der Bedienung von Fernsehgeräten üblich. Die verschiedenen Bedienmenüs können dabei in hierarchischer Struktur angelegt sein. Die einzelnen Bedienfunktionen werden mittels einer Auswahlsteuerung ausgewählt und die Einstellwerte durch Bedienen von +/-Tasten wahlfrei verändert. Beispielsweise ist es hierüber möglich, eine Auswahl von Sprache und Ton vornehmen zu können, Lautstärke, Bildhelligkeit usw. einzustellen.

Mit der Einführung des digitalen Fernsehens und dessen Vorstufen (D2MAC) ist es bekannt, zusammen mit den Fernsehsignalen, insbesondere bei der Übertragung von digitalen Fernsehsignalen, in einem Datenstrom zusätzliche programmbezogene Informationen und Steuerdaten mit zu übertragen, um programmbezogene Einstellungen am Gerät vornehmen zu können. Als Beispiel sei hier genannt, dass zusammen mit dem Videosignal eines Programms der Ton in verschiedenen Sprachen über einzelne Kanäle angeboten wird. Die digitalen Tonsignale werden nach vorgenommener Auswahl aus dem Datenstrom herausgezogen und zusammen mit dem Bild wiedergegeben. Beispielsweise ist es möglich, einen Film in der Originalsprache " Französisch" zu hören oder in einer Synchronsprache, wie z.B. englisch oder deutsch. Ebenso sind andere Sprachen üblich. Darüber hinaus werden aber auch beispielsweise Tondaten mit bestimmten Kompressionsverfahren übertragen, beispielsweise Dolby digital. Um den besten Raumklang bei der Wiedergabe zu ermöglichen, wären in solchen Fällen, wenn ein entsprechender Dolby-Digitaldecoder im Gerät vorhanden ist, eine entsprechende Initialisierung und Steuerung gewünscht. Eine andere Bedienauswahl ist

ebenfalls möglich, wie z.B. die Auswahl von bestimmten Kanälen, z.B. eines Erotikprogramms. Die entsprechenden Informationen hierzu sendet der Sender im Datenstrom mit. Diese Daten werden selektiert und für die Gerätebedienung zur Anzeige gebracht. Das Fernsehgerät reagiert dann bei der entsprechenden Auswahl auf dieses Auswahlmenü.

Der Erfindung liegt die Aufgabe zugrunde, ein Bediensystem, ein Femsehempfangsgerät mit einem solchem Bediensystem, ein zum Bediensystem korrespondierendes Verfahren sowie eine geeignete Anwendung des Verfahrens anzugeben, das eine Erweiterung der Bedienauswahl und Einstellungen der normalen Fernsehgerätefunktionen mit den gleichen Mitteln ermöglicht, und zwar in Abhängigkeit auch von empfangenen Informations- und Steuerdaten, die zusammen mit den Fernsehsignalen empfangen werden.

Die Erfindung löst die Aufgabe durch Ausgestaltung des Bediensystems entsprechend der im Anspruch 1 angegebenen Lehre Im Anspruch 9 ist ein Femsehempfangsgerät genannt. Im Anspruch 10 ist ein zum Bediensystem korrespondierendes Verfahren angegeben. Im Anspruch 19 ist eine geeignete Anwendung des Verfahrens auf ein Femsehempfangsgerät genannt. Unter Femsehempfangsgerät ist hierbei jeder Fernsehempfänger mit Bildröhre, Flachdisplay, optischem Projektionssystem zu verstehen, aber auch Kleinstfernsehgeräte, also tragbare Fernseher, in Automobile eingebaute Fernsehgeräte, gleich welche Displayanordnung diese aufweisen, oder aber auch Videorecorder oder Harddisk-Recorder mit einem Display, das primär nur zur Anzeige von Bedienmenüs und Bedienfunktionen verwendet wird.

Der Vorteil des erfindungsgemäßen Bediensystems und Verfahrens liegt darin, dass eine dynamische Zuordnung einer Bedienauswahlanzeige und/oder einer Bedienfunktion zu empfangenen Informations- und Steuerdaten, die von Kanal zu Kanal völlig unterschiedlich sein können, durch die OSD-Schaltung mit dem darin enthaltenen Prozessor unter Berücksichtigung der normalen Bedienoberfläche des Gerätes erfolgt. Es werden also in Abhängigkeit der Daten aus bereits vorprogrammierten Bedienauswahlanzeigen Bedienauswahlmenüs generiert, denen Bedienmenüs hinterlegt sind, deren Bedienfunktionen dynamisch ebenfalls bei Empfang von Steuerdaten geändert oder ergänzt werden können. Die gewohnte Darstellung des Rahmens des Menüs bleibt stets erhalten. Ein solches Bedienauswahlmenü enthält diverse Einstellungsangaben, beispielsweise Sprach/Tonauswahl, Kanalauswahl, Zeitauswahl, usw., die z. B. spaltenmäßig oder in Zeilen angezeigt werden können. Diese Angaben sind jeweils abhängig von den programmspezifisch empfangenen Informations- und Steuerdaten. Sendet der Sender z.B. keine Sprach-/Ton-Auswahlmöglichkeit, so wird in dem entsprechenden Bedienauswahlmenü auch diese Bedienauswahlanzeige nicht erstellt. Wird die Sprach-/Ton-Auswahlmöglichkeit allerdings als Information oder als Steuerdatum mit übertragen, so generiert die OSD-Schaltung eine entsprechende Bedienauswahlanzeige, und wenn dies die einzige Information ist, das Bedienauswahlmenü und zeigt, falls weitere Informationen empfangen werden, die auswertbaren Bedienauswahlanzeigen an. Die in Spalten oder Zeilenfeldern angeordneten Menüpunkte (Bedienauswahlanzeigen) können mittels Cursor angefahren werden. Zur Realisierung schnellerer Bedienfunktionen können diese auch farblich hinterlegt und jeder Farbe eine farbig gekennzeichnete Taste auf der Fernbedienung zugeordnet sein, so dass bei Bedienung, z.B. einer roten Taste, die einem rot hinterlegten Bedienfeld entspricht, sofort die entsprechende Menüfunktion (Bedienauswahlanzeige) aufgerufen wird, die wiederum ein Bedienmenü in hierarchischer Reihenfolge aufruft, das in gewohnter Weise die Steuerfunktionen zur Auswahl bereit stellt, beispielsweise bei der Ton-/Sprachen-Auswahl alle verfügbaren Sprachen anzeigt, die auch dynamisch dem Programm zugeordnet sein können, um hieraus in gewohnter Weise die Auswahl treffen zu können, die bewirkt, dass der Ton in der gewünschten Landessprache wiedergegeben wird.

Dieses System ist sogar auf Fernsehgeräte anwendbar, die nachrüstbar sind, beispielsweise Steckkontaktleisten zur Aufnahme eines DVB-Moduls oder eines Premiere-Decoders (CICAM) aufweisen. Mit dem Einstecken eines Moduls wird ein Signal generiert, das dem Prozessor der OSD-Schaltung signalisiert, dass beispielsweise ein DVB-Modul implementiert ist oder ein Premiere-Decoder (CICAM) eingesetzt ist. Bedingt hierdurch werden dann bestimmte Bedienauswahlmenüs von dem Prozessor anhand von vorprogrammierten Vorgaben zusammengestellt und angezeigt, so dass der Benutzer sodann die Wahlmöglichkeit im Rahmen der gewohnten Benutzeroberfläche hat, um aus den hinterlegten Bedienmenüs die gewünschten Steuerfunktionen aufrufen und verändern zu können.

Vorteilhafte Ausgestaltungsformen des Bediensystems sind in den abhängigen Unteransprüchen 2 bis 8 im einzelnen angegeben, vorteilhafte Ausgestaltungsformen des Verfahrens nach Anspruch 10 in den abhängigen Ansprüchen 11 bis 18.

Zeigt das empfangene Programm an, dass durch Kanalauswahl verschiedene Filmbeiträge, z. B. verschiedene Erotikfilme, gesehen werden können, so wird auch dies signalisiert, wenn auf das entsprechende Programm bzw. den Empfangskanal abgestimmt oder umgeschaltet wird, über welchen das Programm empfangbar ist. Auch dieser Vorgang erfolgt dynamisch in Abhängigkeit der bereitgestellten Informations- und Steuerdaten vom Sender her. Diese können vom System dann übernommen werden, wenn die Informationen darstell- und unterscheidbar sind, anderenfalls werden sie dazu verwendet, um vorprogrammierte Bedienauswahlmenüs aus vorprogrammierten Bedien-Auswahl-Anzeigen entsprechend zu generieren, damit eine einheitliche Benutzeroberfläche erhalten bleibt. Ähnlich wie vorher beschrieben, kann beim Aufzeigen der Kanalauswahlmöglichkeit der Benutzer dieses Bedienauswahlmenü aktivieren, indem der Cursor oder die entsprechend z. B. farblich zugeordnete Taste der Fernbedienung betätigt wird. Es erscheint sodann die ebenfalls dynamisch in Abhängigkeit von den Empfangsinformationen aufgebaute Kanalauswahlübersicht, z. B. vier Kanäle, zwischen denen der Benutzer auswählen kann, indem die einzelnen angezeigten Bedienfunktionen, hier Kanalangaben, angesteuert und ausgewählt werden. Dasselbe ist auch dann möglich, wenn verschiedene Informations- und Steuerdaten gleichzeitig übertragen werden, beispielsweise Sprach-/Ton-Auswahl, Zeitauswahl und Kanalauswahl ermöglicht werden sollen. Für diese Fälle wird eine Übersicht der möglichen Auswahlanzeigen in Form von übersichtlichen Bedienauswahlmenüs angezeigt. Der Benutzer hat sodann die Möglichkeit, hieraus eine Vorauswahl zu treffen, und kann in der hinterlegten Menüebene dann die entsprechenden Einstellungen selektieren oder die Werte verändern, z.B. durch Betätigung von +/-Tasten.

Das gleiche Bediensystem und Verfahren lassen sich auch anwenden auf Fernsehgeräte, die durch fernladbare Software programmierbar sind. So kann beispielsweise automatisch signalisiert werden, dass für das Gerät eine neue Software zur Verfügung steht. Der Benutzer kann sofort das Herunterladen auslösen, oder aber es wird ein Übersichtsprogramm dynamisch generiert, aus welchem er wählen kann, ob die Aktualisierung sofort, später oder zur Nachtzeit vorgenommen werden soll. Im letzteren Falle wird das Gerät entweder gegen Abschalten blockiert oder aber in den Standby-Mocäs; gefahren, um die entsprechende Aktualisierung zur Nachtzeit vornehmen zu können.

Die Erfindung wird nachfolgend anhand einiger Beispiele ergänzend erläutert.

Es sei angenommen, dass in dem Fernsehgerät ein DVB-Modul integriert ist, das geeignet ist, digitale Fernsehsignale zu empfangen, zu detektieren und auch wiederzugeben. Wird beispielsweise auf einen digitalen Kanal abgestimmt, so wird ein Datenstrom empfangen, der sowohl die Video- und Audiosignale als auch Steuer- und Informationsdaten beinhaltet. Die Audiosignale können beispielsweise Sprachsignale in verschiedenen Sprachen sein. Der erfindungsgemäß vorgesehene Selektor erkennt die entsprechenden im Datenstrom enthaltenen Informations- und Steuerdaten und teilt sie dem Prozessor der OSD-Schaltung mit. Der Prozessor analysiert die Daten und erkennt, dass z.B. verschiedene Sprach-/Ton-Auswahlmöglichkeiten bezüglich des empfangenen Programms existieren, und generiert hiervon abhängig anhand einer erfolgten Vorprogrammierung ein Bedienauswahlmenü, welches anzeigt, dass mit dem Signal des abgestimmten Kanals und mit dem Empfang des Programms eine Sprach-/Ton-Auswahlmöglichkeit besteht. Entsprechend zeigt das Bedienauswahlmenü die Bedienauswahlanzeige .Sprach-/Tonauswahl. Die Darstellung des Bedienauswahlmenüs erfolgt bei Programmwechsel oder bei Abstimmen auf ein Programm während eines bestimmten Zeitfensters. Der Benutzer hat nun die Möglichkeit, mittels Cursor oder mit der Fernbedienung durch Betätigen einer bestimmten dieser Funktion zugeordneten Taste dem Gerät zu signalisieren, dass eine Sprach-/Ton-Auswahl gewünscht ist. Die OSD-Schaltung generiert sodann eine z.B. tabellarische Übersicht über alle Sprachen, die zusammen mit diesem Programm angeboten werden. Diese Darstellung erfolgt dann ebenfalls dynamisch, wenn die empfangenen Informationsdaten die Ländersprachenhinweise enthalten. Dabei kann das System auch so programmiert sein, dass die Hinweise im übertragenen Schriftzug, in der Grafik etc. dargestellt werden. Es wird also auch die hinterlegte Bedienmenüseite dynamisch den Möglichkeiten des Programms angepasst. Z.B. kann angezeigt werden englisch, polnisch, lettisch, französisch. Der Benutzer hat dann die Möglichkeit, über eine Cursorführung die entsprechenden Darstellungszeile anzufahren und durch Betätigung einer Auswahltaste in gewohnter Weise aus dieser Tabelle die Sprache auszuwählen, in der er den Ton des Programmbeitrags hören möchte. Die Bedienauswahlanzeige Sprach-/Ton-Auswahl blendet sich automatisch nach Ablauf des Zeitfensters bzw. mit der Auswahl der Sprache aus der Sprachübersichtsmenüseite aus.

Das gleiche Bediensystem ist auch auf den digitalen Rundfunk übertragbar, der mit in den Kanälen übertragen wird. Mit dem digitalen Rundfunk können ebenfalls Steuerinformationen übertragen werden, beispielsweise dass eine Vielzahl von Audiobeiträgen in einem Kanal übertragen wird. Eine entsprechende Übersicht, die dynamisch veränderbar ist, zeigt dann, wie viele Audiokanäle verfügbar sind, so dass auch hierüber eine Tonauswahl möglich ist. Die erfindungsgemäße Lehre lässt sich auf alle Bediensysteme übertragen, die auch eine Steuerung in Abhängigkeit von vom Sender empfangenen Informations- und Steuerdaten ermöglichen. Durch die dynamische Zuordnung zu bereits vorgesehenen implementierten Bedienmenüs und/oder der aktuellen dynamischen Ergänzung wird eine beliebige Erweiterung auf verschiedene Systeme ermöglicht, ohne in dem Bediensystem selbst eine Veränderung vornehmen zu müssen. Auch können nachträgliche Erweiterungen softwaremäßig erfasst werden, wenn das Gerät z. B. über Satelliten mit neuer Software geladen wird.

Die Erfindung ist auch bei solchen Bedienauswahlmenüs und Bedienmenüs anwendbar, bei denen auf abgespeicherte Bedienauswahlanzeigen und Bedienfunktionen bei der Darstellung zurückgegriffen wird. Die zusätzlichen Bedienanzeigen und Bedienfunktionen, die aus dem Datenstrom extrahiert werden, können dynamisch an vorgeschriebenen Plätzen in der Darstellung eingegliedert werden. Das Ersetzen oder Einfügen kann auch während des laufenden Empfangs eines Programms im Hintergrund erfolgen. Beim Wiederaufrufen durch Betätigung einer Wiederaufruffunktionstaste erscheint dann die aktualisierte Darstellung des Bedienauswahlmenüs bzw. des Bedienmenüs. Die Aktualisierung kann auch durchgeführt werden, wenn der Benutzer gerade auf dem Bildschirm ein Bedienauswahlmenü oder ein Bedienmenü angezeigt erhält.

## Patentansprüche

1. Bediensystem für ein Femsehempfangsgerät mit einer prozessorgesteuer ten OSD-Schaltung zur Generierung und Einblendung von hierarchisch strukturierten Bedienauswahlmenüs auf dem Display des Femsehempfangsgerätes zur Auswahl einzelner Menüpunkte, welche programmbezogene Bedienfunktionen repräsentieren, mittels Cursorsteuerung oder zugeordneter Tastenfunktionen von bestimmten auf einem Fernbedienungsgeber oder einer Ortsbedienung vorgesehenen Tasten und mit mindestens einer Empfangs-und Decoderschaltung für den Empfang und die Signalaufbereitung von analogen und/oder digitalen Fernsehsignalen, mit welchen programmbezogene Informations- oder Steuerdaten für die Darbietung der Video- und Audiosignale übertragen werden, wobei eine Selektorschaltung die empfangenen auswählbaren Informations- oder Steuerdaten selektiert und an die OSD-Schaltung zur Anzeige auf dem Display des Femsehempfangsgerätes überträgt, wobei der Prozessor der OSD-Schaltung nach einem eingeschriebenen Programm anhand der selektierten programmbezogenen Informations- oder Steuerdaten vorprogrammierte Bedienauswahlanzeigen dynamisch generiert und zur Anzeige auf dem Display des Femsehempfangsgerätes ausgibt, wobei jeder Bedienauswahlanzeige mindestens ein Bedienauswahlmenü mit mindestens einer Bedienfunktion zugeordnet ist, das bei Auswahl angezeigt wird, und wobei die Signalaufbereitung der Video- oder Audiosignale in den Femsehsignalen entsprechend der ausgewählten Bedienfunktion steuerbar ist,
**dadurch gekennzeichnet,**
**dass** der Prozessor der OSD-Schaltung ebenfalls die vorprogrammierbaren Bedienauswahlanzeigen in gewohnter Darstellung dynamisch zum möglichen Einstellen der normalen Femsehgerätfunktionen wie Lautstärke, Bildhelligkeit usw. generiert und zur Anzeige sowie zur Auswahl auf dem Display des Femsehempfangsgerätes ausgibt.

2. Bediensystem nach Anspruch 1, **dadurch gekennzeichnet, dass** jeder Bedienauswahlanzeige ein grafisches Symbol oder ein farbiges Tastenfeld zugeordnet ist, und dass die zugeordneten Tasten auf der Fernbedienung oder an der Ortsbedienung des Femsehempfangsgerätes das grafische Symbol oder die dargestellte Farbkennzeichnung tragen und dass durch Betätigung der zugeordneten Taste die entsprechende Bedienfunktion dargestellt und bedienbar ist.

3. Bediensystem nach Anspruch 1 oder 2, **dadurch gekennzeich** - **net**, dass die OSD-Schaltung mit einer Zeitgeberschaltung gekoppelt ist, die die Anzeige des Bedienauswahlmenüs mit den Bedienauswahlanzeigen während einer bestimmten Zeitdauer nach Abstimmung auf ein Programm oder nach Programmwechsel aktiv schaltet, und dass das Bedienauswahlmenü nach Ablauf der Zeit wiederaufrufbar und überschreibbar abgespeichert ist und mit Umschalten auf ein anderes Programm automatisch in Abhängigkeit von den programmbezogenen Informations- und Steuerdaten in den Femsehsignalen dynamisch ein neues Bedienauswahlmenü angezeigt und beim Abspeichern das alte überschrieben wird.

4. Bediensystem nach einem der vorhergehenden Ansprüche, **dadurch gekennzeichnet, dass** die dynamisch zugeordnete Bedienauswahlanzeige in eine Reihe von Übersichtsdarstellungen anderer Einstellfunktionen eingegliedert ist.

5. Bediensystem nach einem der vorhergehenden Ansprüche, **dadurch gekennzechnet**, dass eine Bedienauswahlanzeige Beschreibungen, Symbole und/oder graphische Gestaltungsmerkmale beinhaltet, die mit den empfangenen Daten übertragen und selektiert sind.

6. Bediensystem nach einem der vorhergehenden Ansprüche, **dadurch gekennzeichnet, dass** die den hierarchisch strukturierten Bedienauswahlmenüs zugeordneten Bedienfunktionen sowohl fest abgespeicherte als auch empfangene Beschreibungen, Symbole und/oder graphische Gestaltungselemente aufweist.

7. Bediensystem nach einem der vorhergehenden Ansprüche, **dadurch gekennzeichnet, dass** die Selektorschaltung während des Empfangs eines Programms neue Informations- oder Steuerdaten selektiert und dass die OSD-Schaltung diese während der Darstellung eines Bedienauswahlmenüs zur Anzeige bringt oder angezeigte ersetzt oder abgespeicherte entsprechend modifiziert, wobei das modifizierte Bedienauswahlmenü bei Aufruf anzeigbar ist.

8. Bediensystem nach Anspruch 1 oder einem der vorhergehenden Ansprüche, **dadurch gekennzeichnet, dass** in Abhängigkeit der Detektion des Vorhandenseins eines Moduls eine dynamische Zuordnung von Bedienauswahlanzeigen erfolgt und der Prozessor der OSD-Schaltung in Abhängigkeit von entsprechend generierten Signalen beim Einstecken eines Moduls Bedienauswahlanzeigen in separate oder in vorhandene Bedienauswahlmenüs eingliedert.

9. Femsehempfangsgerät, welches ein Bediensystem nach einem der vorhergehenden Ansprüche aufweist.

10. Verfahren zum Bedienen eines Femsehempfangsgerätes mit einer prozessorgesteuerten OSD-Schaltung zur Generierung und Einblendung von hierarchisch strukturierten Bedienauswahlmenüs auf dem Display des Fernsehempfangsgerätes, wobei einzelne Menüpunkte mittels Cursor oder zugeordneter Tastenfunktionen von bestimmten auf einem Fembedienungsgeber oder einer Ortsbedienung vorgesehenen Tasten ausgewählt werden können, welche programmbezogene Bedienfunktionen repräsentieren, wobei analoge und/oder digitale Fernsehsignale, mit welchen programmbezogene Informations- oder Steuerdaten für die Darbietung der Video- und Audiosignale übertragen werden, empfangen, selektiert und an die OSD-Schaltung zur Auswertung übertragen werden, wobei vorprogrammierte Bedienauswahlmenüs nach einem eingeschriebenen Programm anhand der selektierten Daten dynamisch generiert und an das Display des Femsehempfangsgerätes ausgegeben werden, wobei jeder Bedienauswahlanzeige mindestens ein Bedienauswahlmenü mit mindestens einer Bedienfunktion zugeordnet ist, das bei Auswahl angezeigt wird, und wobei die Signalaufbereitung der Video- oder Audiosignale in den Femsehsignalen entsprechend der ausgewählten Bedienfunktion gesteuert wird,
**dadurch gekennzeichnet,**
**dass** die vorprogrammierbaren Bedienauswahlanzeigen ebenfalls in gewohnter Darstellung dynamisch zum möglichen Einstellen der normalen Femsehgerätfunktionen wie Lautstärke, Bildhelligkeit usw. generiert und zur Anzeige sowie zur Auswahl auf dem Display des Femsehempfangsgerätes ausgegeben werden.

11. Verfahren nach Anspruch 10, **dadurch gekennzeichnet, dass** jeder Bedienauswahlanzeige ein grafisches Symbol oder ein farbiges symbolisierendes Tastenfeld zugeordnet ist, dass jedem Tastenfeld eine Taste auf der Fernbedienung oder der Ortsbedienung des Femsehempfangsgerätes zugeordnet ist, und dass durch Betätigen der zugeordneten Taste die entsprechenden Bedienfunktionen dargestellt und realisiert werden.

12. Verfahren nach Anspruch 10 oder 11, **dadurch gekennzeichnet, dass** mit dem Programmwechsel oder dem Einschalten eines Programms ein Bedienauswahlmenü automatisch generiert wird und dabei dynamisch Bedienauswahlanzeigen den empfangenen selektierten Informations- und Steuerdaten zugeordnet werden, und dass mit Ablauf eines vorgegebenen Zeitfensters das Bedienauswahlmenü ausgeblendet und abgespeichert wird und durch Aufrufen mittels einer Bedienfunktion über eine Taste wiederaufrufbar ist, und dass das Bedienauswahlmenü von einem neuen überschrieben wird, sobald auf ein anderes Programm umgeschaltet wird, wobei die neuen Bedienauswahlanzeigen in Abhängigkeit von den empfangenen programmspezifischen Informations- oder Steuerdaten unter Berücksichtigung der vorprogrammierten Funktionszuordnungen von der OSD-Schaltung erstellt werden.

13. Verfahren nach einem der Ansprüche 10 bis 12, **dadurch gekennzeichnet, dass** die Bedienauswahlanzeige, die dynamisch in Abhängigkeit von den empfangenen Informations- und Steuerdaten von der OSD-Schaltung generiert wird, in eine Übersichtsdarstellung anderer Einstellinformationen eingegliedert wird.

14. Verfahren nach Anspruch 10, **dadurch gekennzeichnet, dass** eine Detektorschaltung vorgesehen ist, die feststellt, ob ein Zusatzmodul in dem Chassis eingesteckt ist, und dass in Abhängigkeit davon die OSD-Schaltung ein Auswahlmenü generiert, das bestimmte Auswahlanzeigen in Bedienmenüs darstellt, um zugeordnete Funktionen, die in Bedienebenen hinterlegt sind, bedienen zu können.

15. Verfahren nach einem der Ansprüche 10 bis 14, **dadurch gekennzeichnet, dass** das Zusatzmodul ein DVB-Modul ist und dass die programmbezogenen Informations- und Steuerdaten in dem Datenstrom mit übertragen werden.

16. Verfahren nach einem der Ansprüche 10 bis 15, **dadurch gekennzeichnet, dass** die Darstellung in einem laufenden Bild eines Programms erfolgt.

17. Verfahren nach einem der Ansprüche 10 bis 16, **dadurch gekennzeichnet, dass** die empfangenen Daten auch Bedienauswahlanzeigen und/oder Bedienfunktionen zugeordneter Beschreibungen, Symbole und/oder graphischer Gestaltungselemente beinhalten und dass diese zusätzlich oder anstelle von fest gespeicherten Beschreibungen, Symbolen und/oder graphischen Gestaltungselementen angezeigt werden.

18. Verfahren nach einem der Ansprüche 10 bis 17, **dadurch gekennzeichnet, dass** während des Empfangs eines Programms neue Informations- oder Steuerdaten selektiert werden und dass die OSD-Schaltung diese während der Darstellung eines Bedienauswahlmenüs oder Bedienmenüs zur Anzeige bringt oder angezeigte ersetzt oder abgespeicherte entsprechend modifiziert, so dass bei erneutem Aufruf das modifizierte Bedienauswahlmenü oder Bedienmenü angezeigt wird.

19. Anwendung des Verfahrens nach einem der Ansprüche 10 bis 18 auf ein Femsehempfangsgerät, welches ein Display zur Anzeige von Bedienauswahlmenüs und Bedienmenüs enthält.

## Claims

1. Operating system for a television receiver with a processor-controlled OSD circuit for generation and insertion of hierarchically structured operating selection menus on the display of the television receiver for selection of individual menu points, which represent program-related operating functions, by means of cursor control or associated button functions of specific buttons provided on a remote control transmitter or a local control, and with at least one receiving and decoding circuit for reception and signal preparation of analog and/or digital television signals by which program-related informatory or control data for offering the video and audio signals are transmitted, wherein a selector circuit selects the received selectable informatory or control data and transmits them to the OSD circuit for displaying on the display of the television receiver, wherein the processor of the OSD circuit according to an entered program dynamically generates pre-programmed operating selection displays on the basis of the selected program-related informatory or control data and issues them for displaying on the display of the television receiver, wherein associated with each operating selection display is at least one operating selection menu with at least one operating function which is displayed when the selection is made and wherein the signal preparation of the video or audio signals into the television signals is controllable in correspondence with the selected operating function, **characterised in that** the processor of the OSD circuit equally generates the pre-programmable operating selection displays in customary representation dynamically for possible setting of normal television receiver functions such as volume, brightness, etc., and issues them for displaying as well as for selecting on the display of the television receiver.

2. Operating system according to claim 1, **characterised in that** a graphical symbol or a coloured keyboard is associated with each operating selection display and that the associated buttons on the remote control or at the local control of the television receiver carry the graphical symbol or the illustrated colour marking and that through actuation of the associated button the corresponding operating function is represented and operable.

3. Operating system according to claim 1 or 2, **characterised in that** the OSD circuit is coupled with a time transmitter circuit which switches the display of the operating selection menu with the operating selection displays to be active for a specific time period after tuning to a program or after program change and that the operating selection menu after expiry of the time can be called up again and is stored to be overwritable and with switching over to another program a new operating selection menu is dynamically displayed automatically in dependence on the program-related informatory and control data in the television signals and when stored the old operating selection menu is overwritten.

4. Operating system according to any one of the preceding claims, **characterised in that** the dynamically associated operating selection display is integrated in a series of overview representations of other setting functions.

5. Operating system according to any one of the preceding claims, **characterised in that** an operating selection display includes descriptions, symbols and/or graphical design features which are transmitted and selected with the received data.

6. Operating system according to any one of the preceding claims, **characterised in that** the operating functions associated with the hierarchically structured operating selection menus have not only fixedly stored, but also received descriptions, symbols and/or graphical design elements.

7. Operating system according to any one of the preceding claims, **characterised in that** the selector circuit selects new informatory or control data during reception of a program and that the OSD circuit during representation of an operating selection menu displays these data or replaces displayed data or correspondingly modifies displayed data, wherein the modified operating selection menu can be displayed when called up.

8. Operating system according to claim 1 or any one of the preceding claims, **characterised in that** depending on the detection of the presence of a module a dynamic association of operating selection displays is carried out and the processor of the OSD circuit integrates operating selection displays in separate or existing selection menus in dependence on correspondingly generated signals when a module is plugged in.

9. Television receiver which comprises an operating system according to any one of the preceding claims.

10. Method of operating a television receiver with a processor-controlled OSD circuit for generation and insertion of hierarchically structured operating selection menus on the display of the television receiver, wherein individual menu points can be selected by means of cursor or associated button functions of specific buttons which are provided on a remote control transmitter or a local control and which represent program-related operating functions, wherein analog and/or digital television signals by which program-related informatory or control data for offering the video and audio signals are transmitted, received, selected and transferred to the OSD circuit for evaluation, wherein pre-programmed operating selection menus are dynamically generated according to an entered program on the basis of the selected data and are issued to the display of the television receiver, wherein associated with each operating selection display is at least one operating selection menu with at least one operating function which is displayed when the selection is made, and where the signal preparation of the video or audio signals into the television signals is controlled in correspondence with the selected operating function, **characterised in that** the pre-programmable operating selection displays are equally dynamically generated in customary representation for possible setting of normal television receiver functions such as volume, brightness, etc., and are issued for displaying as well as for selecting on the display of the television receiver.

11. Method according to claim 10, **characterised in that** a graphical symbol or a coloured, symbolising keyboard is associated with each operating selection display, that a button on the remote control or the local control of the television receiver is associated with each keyboard and that through actuation of the associated button the corresponding operating functions are illustrated and realised.

12. Method according to claim 10 or 11, **characterised in that** an operating selection menu is automatically generated with the program change or the switching-on of a program and **in that** case dynamic operating selection displays are associated with the received selected informatory and control data and that with expiry of a predetermined time window the operating selection menu is cut out and stored and can be called up again by calling up by means of an operating function by way of a button, and that the operating selection menu is written over by a new one as soon as switching over to another program takes place, wherein the new operating selection displays are replaced depending on the received program-specific informatory or control data with consideration of the pre-programmed functional associates of the OSD circuit.

13. Method according to any one of claims 10 to 12, **characterised in that** the operating selection display dynamically generated in dependence on the received informatory and control data by the OSD circuit is integrated into an overview representation of other setting data.

14. Method according to claim 10, **characterised in that** a detector circuit is provided which ascertains whether an auxiliary module is plugged into the chassis and that in dependence thereon the OSD circuit generates a selection menu which illustrates specific selection displays in operating menus in order to be able to operate associated functions filed in operating planes.

15. Method according to any one of claims 10 to 14, **characterised in that** the auxiliary module is a DVB module and that the program-related informatory and control data are transferred to the data flow.

16. Method according to any one of claims 10 to 15, **characterised in that** the representation takes place in a current image of a program.

17. Method according to any one of claims 10 to 16, **characterised in that** the received data also include descriptions, symbols and/or graphical design elements associated with operating selection displays and/or operating functions and that these are displayed additionally to or instead of fixedly stored descriptions, symbols and/or graphical design elements.

18. Method according to any one of claims 10 to 17, **characterised in that** during the reception of a program new informatory or control data are selected and that the OSD circuit displays these data during the representation of an operating selection menu or operating menu or replaces displayed data or correspondingly modifies stored data so that the modified operating selection menu or operating menu is displayed each time a new call-up is made.

19. Use of the method according to any one of claims 10 to 18 on a television receiver which includes a display for displaying operating selection menus and operating menus.

## Revendications

1. Système de réglage pour un appareil récepteur de télévision, comprenant un circuit OSD ("On Screen Display"/menu à l'écran) piloté par processeur pour générer et afficher des menus de choix de réglages à structure hiérarchique sur l'écran de l'appareil récepteur de télévision pour le choix de points de menus individuels, lesquels représentent les fonctions de réglage se référant aux programmes, au moyen d'une commande par curseur ou de fonctions-touches associées à des touches déterminées prévues sur une télécommande ou sur un pupitre local, et comprenant au moins un circuit de réception et de décodage pour la réception et le traitement de signaux de télévision analogiques et/ou numériques au moyen desquels sont transmises des données d'information ou de commande se référant aux programmes pour la restitution des signaux vidéo et audio, dans lequel un circuit sélecteur sélectionne les données d'information ou de commande reçues susceptibles d'être choisies et les transmet au circuit OSD pour l'affichage sur l'écran de l'appareil récepteur de télévision, dans lequel le processeur du circuit OSD génère de manière dynamique, suivant un programme enregistré et au moyen des données d'information ou de commande choisies se référant aux programmes, des affichages de choix de réglages préprogrammés et les envoie pour l'affichage sur l'écran de l'appareil récepteur de télévision, dans lequel au moins un menu de choix de réglages avec au moins une fonction de réglage est associé à chaque affichage de choix de réglages, fonction qui est affichée lors du choix, et dans lequel le traitement des signaux vidéo ou audio dans les signaux télévisuels est susceptible d'être commandé de façon correspondant à la fonction de réglage choisie,
**caractérisé en ce que**
le processeur du circuit OSD génère également les affichages de choix de réglages préprogrammés de manière dynamique avec représentation habituelle pour un ajustement possible des fonctions normales d'un appareil de télévision comme le volume, la luminosité de l'image, etc., et les envoie pour l'affichage ainsi que pour le choix sur l'écran de l'appareil récepteur de télévision.

2. Système de réglage selon la revendication 1, **caractérisé en ce qu'**un symbole graphique ou un champ de touches en couleurs est associé à chaque affichage de choix de réglages, et **en ce que** les touches associées sur la télécommande ou sur le pupitre local de l'appareil récepteur de télévision portent le symbole graphique ou la désignation de couleur représentée, et **en ce que** la fonction de réglage correspondante est illustrée et réglable par actionnement de la touche associée.

3. Système de réglage selon la revendication 1 ou 2, **caractérisé en ce que** le circuit OSD est couplé à un circuit de temporisation qui rend actif l'affichage du menu de choix de réglages avec les indications de choix de réglages pendant une durée déterminée après accord sur un programme ou après changement de programme, et **en ce que** le menu de choix de réglages est mémorisé après écoulement de ladite durée de manière à pouvoir être rappelé et modifié par surécriture, et lors de la commutation vers un autre programme, un nouveau menu de choix de réglages est automatiquement affiché de manière dynamique en fonction des données d'information et de commande se référant aux programmes contenues dans les signaux télévisuels, et lors de sa mémorisation l'ancien est modifié par surécriture.

4. Système de réglage selon l'une des revendications précédentes, **caractérisé en ce que** l'affichage de choix de réglages associé de manière dynamique est intégré dans une série de représentations d'ensemble d'autres fonctions d'ajustement.

5. Système de réglage selon l'une des revendications précédentes, **caractérisé en ce qu'**un affichage de choix de réglages contient des descriptions, des symboles et/ou des éléments graphiques de conception, qui sont transmis avec les données reçues et sélectionnés.

6. Système de réglage selon l'une des revendications précédentes, **caractérisé en ce que** les fonctions de réglages associées aux menus de choix de réglages à structure hiérarchique comprennent des descriptions, des symboles et/ou des éléments graphiques de conception aussi bien sous forme définitivement mémorisée que sous forme reçue.

7. Système de réglage selon l'une des revendications précédentes, **caractérisé en ce que**, pendant la réception d'un programme, le circuit sélecteur sélectionne de nouvelles données d'information ou de commande, et **en ce que**, pendant la représentation d'un menu de choix de réglages, le circuit OSD amène ces nouvelles données à l'affichage ou remplace des données affichées ou encore modifie de façon correspondante des données mémorisées, et le menu de choix de réglages modifiés peut être affiché en cas d'appel.

8. Système de réglage selon la revendication 1 ou selon l'une des revendications précédentes, **caractérisé en ce qu'**une association dynamique des affichages de choix de réglages a lieu en fonction de la détection de la présence d'un module, et le processeur du circuit OSD intègre des affichages de choix de réglages, en fonction de signaux générés en correspondance lors du branchement d'un module, dans des menus de choix de réglages séparés ou dans des menus de choix de réglages existants.

9. Appareil récepteur de télévision qui comprend un système de réglage selon l'une des revendications précédentes.

10. Procédé pour le réglage d'un appareil récepteur de télévision avec un circuit OSD commandé par processeur pour générer et afficher des menus de choix de réglages à structure hiérarchique sur l'écran de l'appareil récepteur de télévision, dans lequel des points de menus individuels peuvent être choisis au moyen d'un curseur ou au moyen de fonctions-touches associées à certaines touches prévues sur une télécommande ou sur un pupitre local, touches qui représentent des fonctions de réglages se référant aux programmes, dans lequel des signaux télévisuels analogiques et/ou numériques, au moyen desquels sont transmises des données d'information ou de commande se référant aux programmes pour la restitution des signaux vidéo et audio, sont reçus, sélectionnés et transmis au circuit OSD pour leur exploitation, dans lequel des menus de choix de réglages préprogrammés sont générés de manière dynamique d'après un programme mémorisé, à l'aide des données sélectionnées et sont envoyés à l'écran de l'appareil récepteur de télévision, dans lequel au moins un menu de choix de réglages avec au moins une fonction de réglage est associé à chaque affichage de choix de réglages, fonction qui est affichée en cas de choix, et dans lequel le traitement des signaux vidéo ou audio dans les signaux télévisuels est commandé en correspondance de la fonction de réglage choisie,
**caractérisé en ce que**
les affichages de choix de réglage préprogrammés sont générés de manière dynamique avec représentation habituelle pour un ajustement possible des fonctions normales d'un appareil de télévision comme le volume, la luminosité de l'image, etc., et sont envoyés pour l'affichage ainsi que pour le choix sur l'écran de l'appareil récepteur de télévision.

11. Procédé selon la revendication 10, **caractérisé en ce qu'**un symbole graphique ou un champ de touches en couleurs est associé à chaque affichage de choix de réglages, **en ce qu'**une touche sur la télécommande ou sur le pupitre local de l'appareil récepteur de télévision est associée à chaque champ de touches, et **en ce que** la fonction de réglage correspondante est illustrée et réalisée par actionnement de la touche associée.

12. Procédé selon la revendication 10 ou 11, **caractérisé en ce que**, lors d'un changement de programme ou lors de la mise en marche d'un programme, un menu de choix de réglages est automatiquement généré et des affichages de choix de réglages sont alors associés de manière dynamique aux données d'information et de commande reçues sélectionnées, et **en ce qu'**après écoulement d'une fenêtre temporelle prédéterminée le menu de choix de réglages est effacé et mémorisé et susceptible d'être rappelé par appel au moyen d'une fonction de réglage via une touche, et **en ce que** le menu de choix de réglages est modifié par un nouveau par surécriture, dès commutation à un autre programme, et les nouveaux affichages de choix de réglages sont établis en fonction des données d'information ou de commande reçues spécifiques aux programmes, en prenant en compte des associations préprogrammées des fonctions du circuit OSD.

13. Procédé selon l'une des revendications 10 à 12, **caractérisé en ce que** l'affichage de choix de réglages, qui est généré de façon dynamique par le circuit OSD en fonction des données d'information et de commande reçues, est intégré dans une représentation d'ensemble d'autres informations d'ajustement.

14. Procédé selon la revendication 10, **caractérisé en ce qu'**il est prévu un circuit détecteur qui constate si un module additionnel est branché dans le châssis, et **en ce que**, en fonction de cette constatation, le circuit OSD génère un menu de choix qui représente certains affichages de choix dans des menus de réglages afin de pouvoir régler des fonctions associées qui sont déposées dans des plans de réglages.

15. Procédé selon l'une des revendications 10 à 14, **caractérisé en ce que** le module additionnel est un module DVB, et **en ce que** les données d'information et de commande se référant aux programmes sont transmises conjointement dans le flux de données.

16. Procédé selon l'une des revendications 10 à 15, **caractérisé en ce que** la représentation a lieu dans l'image en cours d'un programme.

17. Procédé selon l'une des revendications 10 à 16, **caractérisé en ce que** les données reçues contiennent également des descriptions, des symboles et/ou des éléments graphiques de conception associés aux affichages de choix de réglages et/ou aux fonctions de réglages, et **en ce que** ceux-ci sont affichés en supplément ou en remplacement de descriptions, de symboles et/ou d'éléments graphiques de conception définitivement mémorisés.

18. Procédé selon l'une des revendications 10 à 17, **caractérisé en ce que**, pendant la réception d'un programme, de nouvelles données d'information et de commande sont sélectionnées et **en ce que** le circuit OSD amène ces données à l'affichage pendant la représentation d'un menu de choix de réglages ou d'un menu de réglages, ou remplace des données affichées, ou encore modifie en correspondance des données mémorisées, de sorte que le menu de choix de réglages ou le menu de réglages modifié soit affiché en cas de rappel.

19. Application du procédé selon l'une des revendications 10 à 18 à un appareil récepteur de télévision qui contient un écran pour l'affichage de menus de choix de réglages et de menus de réglages.
